# EUROPEAN PATENT SPECIFICATION

(11) **EP 4 024 736 B1**
(45) Date of publication and mention of the grant of the patent: **04.09.2024**
(21) Application number: 20866313.8
(22) Date of filing: 07.09.2020
(51) Int. Cl.: H04L 1/18

(54) **INSTRUCTION METHOD AND APPARATUS FOR HYBRID AUTOMATIC REPEAT REQUEST, AND STORAGE MEDIUM**
ANWEISUNGSVERFAHREN UND -VORRICHTUNG FÜR HYBRIDE AUTOMATISCHE WIEDERHOLUNGSAUFFORDERUNG UND SPEICHERMEDIUM
PROCÉDÉ ET APPAREIL D'INSTRUCTION POUR DEMANDE AUTOMATIQUE DE RÉPÉTITION HYBRIDE, ET SUPPORT DE STOCKAGE

(30) Priority: 17.09.2019 CN 201910877641
(43) Date of publication of application: 06.07.2022
(73) Proprietor: Huawei Technologies Co., Ltd., Longgang Shenzhen, Guangdong 518129 (CN)
(72) Inventor: QIAO, Yunfei, Shenzhen, Guangdong 518129518129 (CN); LIN, Meixin, Shenzhen, Guangdong 518129 (CN)
(74) Representative: Gill Jennings & Every LLP
(86) International application number: PCT/CN2020/113780
(87) International publication number: WO 2021/052210

(56) References cited:
- WO-A1-2016/072892
- WO-A1-2019/160737
- CN-A- 101 529 781
- US-A1- 2014 036 808
- No further relevant documents disclosed
- MEDIATEK INC.: "Delay-tolerant re-transmission mechanisms in NR-NTN", 3GPP TSG RAN WG1 MEETING #97, R1-1906466, 17 May 2019 (2019-05-17), XP051708501
- INTERDIGITAL INC.: "Deactiving HARQ for Non-Terrestrial Networks", 3GPP TSG RAN WG1 MEETING #92BIS, R1-1804857, 20 April 2018 (2018-04-20), XP051414209

## Description

### TECHNICAL FIELD

This application relates to communication technologies, and in particular, to a method and an apparatus for indicating a hybrid automatic repeat request, and a storage medium.

### BACKGROUND

In an existing communication system, a hybrid automatic repeat request (Hybrid Automatic Repeat Request, HARQ) is usually used to ensure reliability of data transmission. For example, a transmit end may include some redundant information in to-be-sent data, so that when receiving the data, a receive end can correct some errors in the data based on the redundant information, to reduce a quantity of times of retransmission. For errors that cannot be corrected by the receive end, the receive end needs to request the transmit end to resend data.

With the development of communication technologies, satellite communication has become an important part of mobile communication. Satellite communication has characteristics such as a long communication distance, a large coverage area, and flexible networking, and can provide services for various fixed terminals or mobile terminals. Mediatex inc.: "Delay-tolerant re-transmission mechanisms in NR-NTN", 3GPP TSG RAN WG1 Meeting #97 discloses HARQ aspects for satellite deployment. Interdigital inc.: "Deactivating HARQ for Non-Terrestrial Networks", 3GPP TSG RAN WG1 Meeting #92bis discloses ways of deactivating HARQ for non-terrestrial networks. WO 2019/160737 A1 discloses procedures for HARQ management in NR-based non-terrestrial networks.

However, a round-trip transmission delay of a signal in a satellite communication system is relatively large. Consequently, information used by the receive end to request the transmit end to resend data cannot reach the transmit end in time, and data resent by the transmit end cannot reach the receive end in time. Therefore, an advantage of a HARQ function cannot be well reflected in the satellite communication system. Therefore, a method capable of indicating that a HARQ function is enabled or disabled is urgently required in a conventional technology.

### SUMMARY

This application provides a method and an apparatus for indicating a hybrid automatic repeat request, and a storage medium, to implement a method capable of indicating that a HARQ function is enabled or disabled, so that the HARQ function in a satellite communication system can be enabled or disabled based on an actual requirement. The scope of protection of the invention is defined by the appended claims.

According to a first aspect, this application provides a method according to claim 1 for indicating a hybrid automatic repeat request. The method includes: A network device carries, by using an RRC message, indication information indicating that a HARQ function is enabled or disabled, and sends the RRC message to a terminal. When receiving the RRC message sent by the network device, the terminal may determine, based on the indication information, whether the HARQ function in a current serving cell is enabled or disabled. A method capable of indicating that a HARQ function is enabled or disabled is implemented by using the solution provided in this embodiment, so that the HARQ function in a satellite communication system can be enabled or disabled based on an actual requirement, thereby improving flexibility of the HARQ function. In addition, the indication information is carried by using at least one resource in a data channel resource, a broadcast channel resource, and a resource block. Compared with indicating, by using a control channel resource, that the HARQ function is enabled or disabled, this not only saves precious control channel resources, but also avoids air interface resource waste caused by frequently indicating that the HARQ function is enabled or disabled.

In a possible design, the RRC message includes a serving cell downlink data channel configuration information element, and the indication information is a field that is used for indicating a process number of a HARQ supported by a serving cell and that is in the serving cell downlink data channel configuration information element. By using the solution provided in this embodiment, the RRC message can be used for indicating, without frame format modifications, that the HARQ function is disabled or enabled, so that modifications to an existing protocol are reduced.

In a possible design, that the HARQ function is disabled is indicated in a manner in which the process number of the HARQ supported by the serving cell is different from values in a conventional technology. For example, a maximum process number of a downlink HARQ supported by a serving cell in the conventional technology may be configured as 2, 4, 6, 10, 12, or 16. In this embodiment, that the HARQ function is disabled may be indicated in a manner in which the maximum process number of the downlink HARQ supported by the serving cell is different from the values in the conventional technology.

In a possible design, the maximum process number of the downlink HARQ supported by the serving cell may be configured as 0, 2, 4, 6, 10, 12, or 16. In other words, 0 is a newly added value. When the maximum process number of the downlink HARQ supported by the serving cell is configured as 0, it indicates that the downlink HARQ function is disabled. By using the solution provided in this embodiment, it indicates that the downlink HARQ function is disabled when the maximum process number of the downlink HARQ supported by the serving cell is configured as 0, so that the RRC message can be used for indicating, without frame format modifications, that the HARQ function is disabled or enabled, thereby reducing modifications to the existing protocol.

In a possible design, when the maximum process number of the downlink HARQ supported by the serving cell is configured as 0, it indicates that the downlink HARQ function and an uplink HARQ function are disabled. In other words, a new value 0 is added to the field that is used for indicating the process number of the HARQ supported by the serving cell and that is in the serving cell downlink data channel configuration information element in the RRC message, to simultaneously indicate that the downlink HARQ function and the uplink HARQ function are disabled, and reduce indication overheads required for simultaneously indicating that the downlink HARQ function and the uplink HARQ function are disabled or enabled, thereby improving indication efficiency.

In a possible design, the RRC message includes a serving cell uplink data channel configuration information element, the indication information is an optional field newly added to the serving cell uplink data channel configuration information element, and the optional field is used for indicating whether the serving cell supports the HARQ function. By using the solution provided in this embodiment, the RRC message can indicate, based on existing fields, that the HARQ function is disabled or enabled without adding a field by adding an additional bit in the RRC message, so that modifications to the existing protocol are reduced.

In a possible design, the optional field newly added to the serving cell uplink data channel configuration information element is a HARQ-disable-indicator field, and when the HARQ-disable-indicator field does not exist, it indicates that the uplink HARQ function is enabled. When the HARQ-disable-indicator field exists, it indicates that the uplink HARQ function is disabled. By using the solution provided in this embodiment, the RRC message can indicate, based on existing fields, that the HARQ function is disabled or enabled without adding a field by adding an additional bit in the RRC message, so that modifications to the existing protocol are reduced.

In a possible design, the optional field newly added to the serving cell uplink data channel configuration information element is a HARQ-enable-indicator field. When the HARQ-enable-indicator field does not exist, it indicates that the uplink HARQ function is disabled, and when the HARQ-enable-indicator field exists, it indicates that the uplink HARQ function is enabled. By using the solution provided in this embodiment, the RRC message can indicate, based on existing fields, that the HARQ function is disabled or enabled without adding a field by adding an additional bit in the RRC message, so that modifications to the existing protocol are reduced.

In a possible design, when the HARQ-disable-indicator field does not exist, it may alternatively simultaneously indicate that the downlink HARQ function and the uplink HARQ function are enabled. When the HARQ-disable-indicator field exists, it simultaneously indicates that the downlink HARQ function and the uplink HARQ function are disabled. In other words, the optional HARQ-disable-indicator field is newly added to a PUSCH-ServingCellConfig information element in the RRC message, to simultaneously indicate that the downlink HARQ function and the uplink HARQ function are disabled or enabled, to reduce indication overheads required for simultaneously indicating that the downlink HARQ function and the uplink HARQ function are disabled or enabled, thereby improving indication efficiency.

In a possible design, when the HARQ-enable-indicator field does not exist, it simultaneously indicates that the downlink HARQ function and the uplink HARQ function are disabled, and when the HARQ-enable-indicator field exists, it simultaneously indicates that the downlink HARQ function and the uplink HARQ function are enabled. In other words, the optional HARQ-enable-indicator field is newly added to the PUSCH-ServingCellConfig information element in the RRC message, to simultaneously indicate that the downlink HARQ function and the uplink HARQ function are disabled or enabled, to reduce indication overheads required for simultaneously indicating that the downlink HARQ function and the uplink HARQ function are disabled or enabled, thereby improving indication efficiency.

In a possible design, the indication information is identification information of a bandwidth part configured by the network device for the terminal.

In a possible design, the identification information of the bandwidth part includes an identity of the bandwidth part. If a value of the identity of the bandwidth part is within a first range, the HARQ function corresponding to the bandwidth part is disabled; or if the value of the identity of the bandwidth part is within a second range, the HARQ function corresponding to the bandwidth part is enabled. By using the solution provided in this embodiment, the RRC message can be used for indicating, without frame format modifications, that the HARQ function is disabled or enabled, so that modifications to an existing protocol are reduced.

In a possible design, the first range is 5 to 9, and the second range is 0 to 4.

In a possible design, the first range may not be limited to 5 to 9, and may alternatively be a value range other than 5 to 9 and different from a value range in the conventional technology, for example, is 10 to 14, or 15 to 19.

In a possible design, the bandwidth part is a downlink bandwidth part or an uplink bandwidth part. In other words, when a value of a downlink BWP-ID field is within the first range, the downlink HARQ function is disabled, and when the value of the downlink BWP-ID field is within the second range, the downlink HARQ function is enabled. When a value of an uplink BWP-ID field is within the first range, for example, 5 to 9, the uplink HARQ function is disabled, and when the value of the uplink BWP-ID field is within the second range, for example, 0 to 4, the uplink HARQ function is enabled. A value range of the BWP-ID field in a BWP-Downlink information element in the RRC message is expanded to indicate that the downlink HARQ function is disabled or enabled, and a value range of the BWP-ID field in a BWP-Uplink information element in the RRC message is expanded to indicate that the uplink HARQ function is disabled or enabled, so that the RRC message can be used for indicating, without frame format modifications, that the HARQ function is disabled or enabled, thereby reducing modifications to the existing protocol.

According to the invention, the RRC message includes a management information base MIB information element, and the indication information is a spare field in the MIB information element. A bit corresponding to the spare field indicates whether the serving cell supports the HARQ function. The spare field in the MIB information element is used for indicating whether the serving cell supports the HARQ function. The spare field is a spare bit in the MIB information element. Therefore, when the spare field is used for indicating whether the serving cell supports the HARQ function, the RRC message can be used for indicating, without frame format modifications, that the HARQ function is disabled or enabled, to reduce modifications to the existing protocol and improving compatibility with the existing protocol.

In a possible design, when a value of the spare field is 0, it indicates that the uplink HARQ function and the downlink HARQ function are both enabled. When the value of the spare field is 1, it indicates that the uplink HARQ function and the downlink HARQ function are both disabled.

According to the invention, when the value of the spare field is 0, it indicates that the uplink HARQ function and the downlink HARQ function are both disabled. When the value of the spare field is 1, it indicates that the uplink HARQ function and the downlink HARQ function are both enabled.

In a possible design, when the value of the spare field is 0, it indicates that the uplink HARQ function is enabled, and the downlink HARQ function uses a default configuration.

In a possible design, when the value of the spare field is 0, it indicates that the downlink HARQ function is enabled, and the uplink HARQ function uses a default configuration.

According to a second aspect, this application provides a communication apparatus, according to claim 14.

It can be learned that, in the foregoing aspects, a method capable of indicating that the HARQ function is enabled or disabled is implemented by using the RRC message to carry the indication information indicating that the HARQ function is enabled or disabled, so that the HARQ function in a satellite communication system can be enabled or disabled based on an actual requirement, thereby improving flexibility of the HARQ function. In addition, the indication information is carried by using at least one resource in a data channel resource, a broadcast channel resource, and a resource block. Compared with indicating, by using a control channel resource, that the HARQ function is enabled or disabled, this not only saves precious control channel resources, but also avoids air interface resource waste caused by frequently indicating that the HARQ function is enabled or disabled.

### BRIEF DESCRIPTION OF DRAWINGS

FIG. 1 is a schematic diagram of an application scenario according to an embodiment of this application;
FIG. 2 is a schematic diagram of a DCI frame format according to an embodiment of this application;
FIG. 3 is a schematic diagram of another application scenario according to an embodiment of this application;
FIG. 4 is a signaling diagram of a method for indicating a hybrid automatic repeat request according to an embodiment of this application;
FIG. 5 is a schematic diagram of a structure of a communication apparatus 50;
FIG. 6 is a schematic diagram of a structure of a communication apparatus 60 according to an embodiment of this application;
FIG. 7 is a schematic diagram of a structure of another communication apparatus 70 according to an embodiment of this application;
FIG. 8 is a schematic diagram of a structure of still another communication apparatus 80 according to an embodiment of this application;
FIG. 9 is a schematic diagram of a structure of still another communication apparatus 90 according to an embodiment of this application; and
FIG. 10 is a schematic diagram of a structure of still another communication apparatus 1000 according to an embodiment of this application.

### DESCRIPTION OF EMBODIMENTS

Terms used in an implementation part of this application are merely used to explain specific embodiments of this application, and are not intended to limit this application.

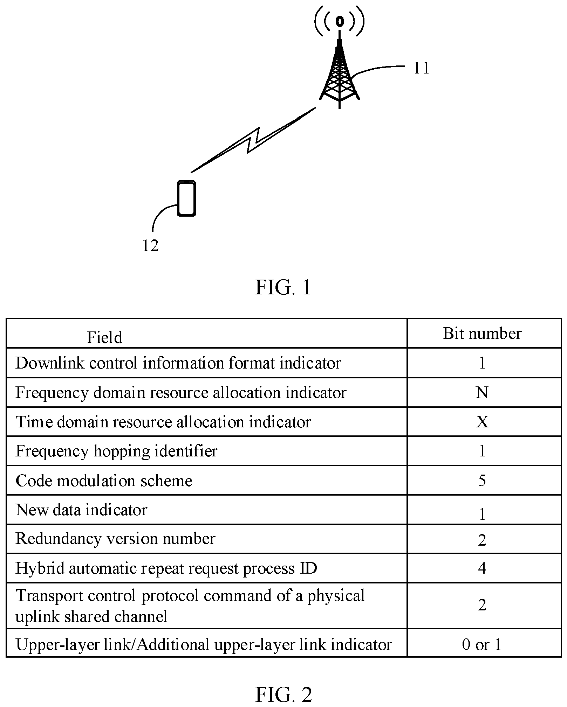

The embodiments of this application may be applied to various types of communication systems. FIG. 1 is a schematic diagram of an application scenario according to an embodiment of this application. A communication system shown in FIG. 1 mainly includes a network device 11 and a terminal 12.
(1) The network device 11 may be a network side device, for example, an access point (Access Point, AP) of a wireless local area network (Wireless Local Area Network, WLAN), an evolved NodeB (Evolved NodeB, eNB or eNodeB) of 4G, or a base station for next generation communication, for example, a 5G new radio access technology (New Radio Access Technology, NR) base station (next generation Node B, gNB), a small cell, or a micro cell, or may also be a relay station, a transmission and reception point (Transmission and Reception Point, TRP), a roadside unit (Road Side Unit, RSU), or the like. In this embodiment, base stations in communication systems of different communication standards are different. For distinction, a base station in a 4G communication system is referred to as a long term evolution (Long Term Evolution, LTE) eNB, and a base station in a 5G communication system is referred to as an NR gNB. A base station that supports both the 4G communication system and the 5G communication system is referred to as an evolved long term evolution (Evolved Long Term Evolution, eLTE) eNB. These names are only for ease of differentiation, but are not limited in meaning.
(2) The terminal 12 is also referred to as user equipment (User Equipment, UE), and is a device that provides voice and/or data connectivity for a user, for example, a handheld device with a wireless connection function, a vehiclemounted device, or a vehicle with a vehicle to vehicle (vehicle to vehicle, V2V) communication capability. Common terminals include, for example, a mobile phone, a tablet computer, a notebook computer, a palmtop computer, a mobile internet device (mobile internet device, MID), and a wearable device such as a smartwatch, a smart band, or a pedometer.
(3) "A plurality of" means two or more, and another quantifier is similar to this. The term "and/or" describes a correspondence between associated objects and represents that three relationships may exist. For example, A and/or B may represent the following three cases: Only A exists, both A and B exist, and only B exists. The character "/" usually indicates an "or" relationship between the associated objects.

It should be noted that, a quantity and a type of the terminals 12 included in the communication system shown in FIG. 1 are merely an example, and this embodiment of this application is not limited thereto. For example, more terminals 12 that communicate with the network device 11 may be further included. For brevity, details are not described in the accompanying drawings. In addition, in the communication system shown in FIG. 1, although the network device 11 and the terminal 12 are shown in FIG. 1, the communication system may include but is not limited to the network device 11 and the terminal 12, for example, may further include a core network device node or a device used for a virtualized network function. This is obvious to persons of ordinary skill in the art, and details are not described herein.

In addition, the embodiments of this application may not only be applied to communication systems such as a 4G wireless communication system, a vehicle to everything (vehicle to everything, V2X) communication system, a device-to-device (Device-to-Device, D2D) communication system, and a subsequent evolution system of LTE, but also be applied to a next-generation wireless communication system, namely, a 5G communication system, and may be applied to another system that may appear in the future, for example, a next-generation Wi-Fi network or a 5G Internet of Vehicles. It should be noted that, with continuous evolution of the communication system, names of the foregoing network elements may change in another system that may appear in the future. In this case, the solutions provided in the embodiments of this application are also applicable.

In an existing communication system, a hybrid automatic repeat request (Hybrid Automatic Repeat Request, HARQ) is usually used to ensure reliability of data transmission. Specifically, the HARQ is a technology that combines forward error correction (Forward Error Correction, FEC) and automatic repeat request (Automatic Repeat Request, ARQ). For example, a transmit end may include some redundant information in to-be-sent data, so that when receiving the data, a receive end can correct some errors in the data based on the redundant information. In other words, the receive end may correct some errors in the data by using FEC, to reduce a quantity of times of retransmission. For errors that cannot be corrected by the receive end by using FEC, the receive end needs to request, by using an ARQ, the transmit end to resend data. For example, the receive end detects, by using an error detection code, whether there is an error in the received data. If there is no error in the received data, the receive end sends acknowledgment information (Acknowledgment, ACK) to the transmit end, so that the transmit end sends new data. If there is an error in the received data, the receive end sends non-acknowledgment information (Non- Acknowledgment, NACK) to the transmit end, so that the transmit end resends same data.

With the development of communication technologies, satellite communication has become an important part of mobile communication. Satellite communication has characteristics such as a long communication distance, a large coverage area, and flexible networking, and can provide services for various fixed terminals or mobile terminals.

However, a round-trip transmission delay of a signal in a satellite communication system is relatively large. For example, a research organized by the 3rd Generation Partnership Project (3rd Generation Partnership Project, 3GPP) shows that a round-trip transmission delay of a low earth orbit (Low Earth Orbit, LEO) satellite (600 kilometers) is 28.408 milliseconds, a round-trip transmission delay of a medium earth orbit (Medium Earth Orbit, MEO) satellite (at a height of 10,000 kilometers) is 190.38 milliseconds, and a round-trip transmission delay of a geostationary earth orbit (Geostationary Earth orbit, GEO) satellite (at a height of 35,786 kilometers) is 544.75 milliseconds. Consequently, information used by the receive end to request the transmit end to resend data cannot reach the transmit end in time, and data resent by the transmit end cannot reach the receive end in time. Therefore, an advantage of HARQ fast feedback cannot be well reflected in the satellite communication system. However, in the satellite communication system, a retransmission task may be completed by using an upper-layer protocol, for example, retransmission is implemented by using a radio link control (Radio link control, RLC) layer. Therefore, a method capable of indicating that a HARQ function is enabled or disabled is urgently required in the satellite communication system.

In a possible implementation, a control channel resource is used to carry indication information indicating that the HARQ function is enabled or disabled. For example, the indication information is carried by using downlink control information (Downlink Control Information, DCI). Specifically, there may be a plurality of frame formats of the DCI. FIG. 2 shows a frame format of the DCI. As shown in FIG. 2, each field in the DCI is already defined. If the DCI is required to control the HARQ function to be enabled or disabled, a current frame format of the DCI needs to be modified. For example, a field is extended based on an existing frame format, so that the extended field can indicate that the HARQ function is enabled or disabled. At the same time, a HARQ process number needs to be increased, so that a bit corresponding to a HARQ process ID is added.

However, if the current frame format of the DCI is modified, problems in the following aspects occur. For example, an existing communication protocol and implementation are severely affected. In addition, because the DCI is carried on a physical downlink control channel (Physical Downlink Control Channel, PDCCH), and PDCCH channel resources are very limited, extending several bits in the DCI may require elaborate design, for example, related physical layer resources need to be redesigned. In addition, the DCI needs to be sent once at each TTI. If the DCI is used to control the HARQ function to be enabled or disabled, it means that each TTI needs to indicate, once, that the HARQ function is enabled or disabled. However, usually, the HARQ function does not need to be enabled or disabled once at each TTI. Therefore, frequently indicating that the HARQ function is enabled or disabled further causes air interface resource waste.

For the foregoing problems, an embodiment of this application provides a method for indicating, by using a radio resource control (Radio resource control, RRC) message, that a HARQ function is enabled or disabled. The following describes the method in detail with reference to embodiments.

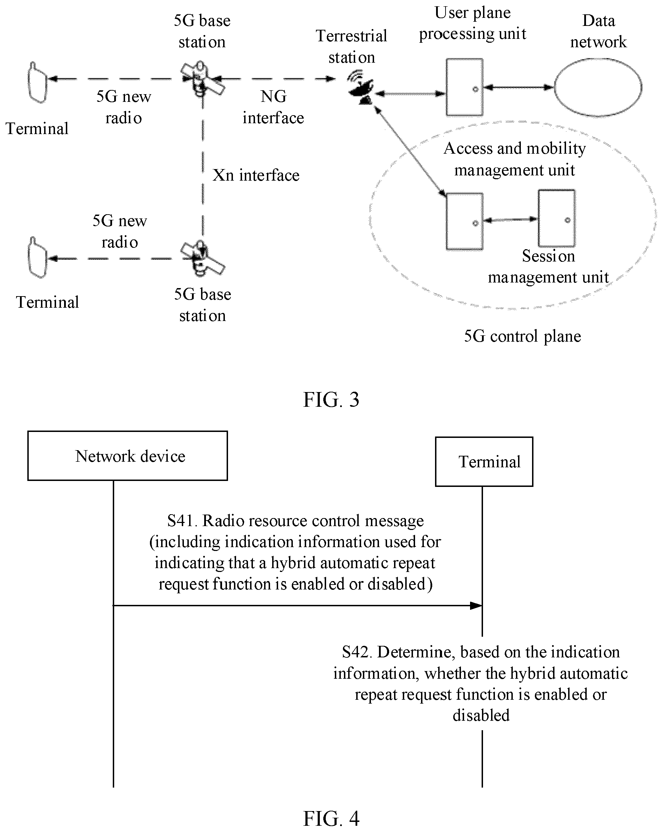

The method for indicating a hybrid automatic repeat request provided in this embodiment of this application may be applied to an application scenario shown in FIG. 3. This application scenario integrates satellite communication technologies and 5G technologies. Network elements in this application scenario include a terminal, a 5G base station, a terrestrial station, and a 5G core network.

The terminal is a mobile device supporting 5G new radio, for example, a mobile device such as a mobile phone or a surface computer. Specifically, the terminal may access a satellite network by using the 5G new radio, and initiate services such as a call and Internet access. The 5G base station is deployed on a satellite, and is mainly configured to: provide wireless access services, schedule radio resources to an access terminal, provide reliable wireless transmission protocols and data encryption protocols, and the like. The terrestrial station is responsible for forwarding signaling and service data between a satellite base station and the 5G core network. The 5G core network is responsible for services such as user access control, mobility management, session management, user security authentication, and charging. The 5G core network includes a plurality of functional units. For example, the plurality of functional units include a control plane functional entity and a data plane functional entity. For example, an access and mobility management unit (Access and Mobility Management Function, AMF) and a session management unit (Session Management Function, SMF) are functional entities of a control plane, and a user plane unit (User Plane Function, UPF) is a functional entity of a data plane. The AMF is responsible for user access management, security authentication, and mobility management. The UPF is responsible for managing functions such as user plane data transmission, traffic statistics collection, and secure eavesdropping.

In addition, the terminal accesses a network by using the 5G new radio. Specifically, the terminal is connected to the 5G base station by using the 5G new radio, and the 5G new radio is a wireless connection between the terminal and the 5G base station. 5G base stations communicate with each other by using an Xn interface, and the Xn interface is mainly used for signaling interworking and user data transmission between the 5G base stations. The 5G base station is connected to the 5G core network by using the terrestrial station. Specifically, the 5G base station communicates with the terrestrial station by using an NG interface, and the NG interface is mainly configured to exchange signaling of a non-access stratum (Non-access stratum, NAS) of the 5G core network and user service data of the 5G core network.

In addition, it should be noted that the method for indicating that the HARQ function is enabled or disabled in this embodiment of this application is applicable not only to the satellite communication system, but also to various types of communication systems described above, for example, the 5G communication system.

FIG. 4 is a signaling diagram of a method for indicating a hybrid automatic repeat request according to an embodiment of this application. Network elements related to the method for indicating a hybrid automatic repeat request include a network device and a terminal, where the network device may be a functional entity in the 5G base station or the 5G core network described above. Specifically, the method includes the following steps.

S41. The network device sends an RRC message to the terminal, where the RRC message includes indication information, and the indication information is used for indicating that a HARQ function is enabled or disabled.

Specifically, the indication information is carried by using at least one of the following resources, and the resources include a data channel resource, a broadcast channel resource, and a resource block. The data channel resource may be specifically a physical downlink shared channel (Physical Downlink Shared Channel, PDSCH) or a physical uplink shared channel (Physical Uplink Shared Channel, PUSCH), the broadcast channel resource may be specifically a physical broadcast channel (Physical Broadcast Channel, PBCH), and the resource block may be specifically a bandwidth part (Bandwidth Part, BWP).

S42. The terminal determines, based on the indication information, whether the HARQ function is enabled or disabled.

Correspondingly, when receiving the RRC message sent by the network device, the terminal obtains the indication information from the RRC message, and determines, based on the indication information, whether the HARQ function in a current serving cell is enabled or disabled.

In this embodiment, a method capable of indicating that the HARQ function is enabled or disabled is implemented by using the RRC message to carry the indication information indicating that the HARQ function is enabled or disabled, so that the HARQ function in a satellite communication system can be enabled or disabled based on an actual requirement, thereby improving flexibility of the HARQ function. In addition, the indication information is carried by using at least one resource in a data channel resource, a broadcast channel resource, and a resource block. Compared with indicating, by using a control channel resource, that the HARQ function is enabled or disabled, this not only saves precious control channel resources, but also avoids air interface resource waste caused by frequently indicating that the HARQ function is enabled or disabled.

The following separately describes at least one resource in the data channel resource, the broadcast channel resource, and the resource block carrying the indication information.

In a possible implementation, the indication information is a nrofHARQ-ProcessesForPDSCH field in a serving cell downlink data channel configuration (PDSCH-ServingCellConfig) information element (Information element, IE) in the RRC message. Herein, the nrofHARQ-ProcessesForPDSCH field is denoted as a first field, and the first field is used for indicating a process number of a HARQ supported by the serving cell, for example, a maximum process number of a downlink HARQ. In a conventional technology, the maximum process number of the downlink HARQ supported by the serving cell may be configured as 2, 4, 6, 10, 12, or 16. Herein, that the HARQ function is disabled may be indicated by using a value different from the maximum process number in the conventional technology. For example, when the maximum process number of the downlink HARQ supported by the serving cell is configured as 1, 3, 5, 7, 8, 9, 11, 13, 14, or 15, it indicates that a downlink HARQ function is disabled.

In this embodiment of this application, the maximum process number of the downlink HARQ supported by the serving cell may be configured as 0, 2, 4, 6, 10, 12, or 16. In other words, 0 is a newly added value. When the maximum process number of the downlink HARQ supported by the serving cell is configured as 0, it indicates that the downlink HARQ function is disabled. When the maximum process number of the downlink HARQ supported by the serving cell is configured as one of 2, 4, 6, 10, 12, and 16, it indicates that the downlink HARQ function is enabled

In this embodiment, a new value, for example, 0, is added to the nrofHARQ-ProcessesForPDSCH field in the PDSCH-ServingCellConfig information element in the RRC message, so that it indicates that the downlink HARQ function is disabled when the maximum process number of the downlink HARQ supported by the serving cell is configured as 0. In this way, the RRC message can be used for indicating, without frame format modifications, that the HARQ function is disabled or enabled, thereby reducing modifications to the existing protocol.

Based on the foregoing embodiment, when the nrofHARQ-ProcessesForPDSCH field is configured as 1, 3, 5, 7, 8, 9, 11, 13, 14, or 15, it may alternatively indicate that the downlink HARQ function and an uplink HARQ function are disabled. Alternatively, when the maximum process number of the downlink HARQ supported by the serving cell is configured as 0, it indicates that the downlink HARQ function and the uplink HARQ function are disabled. When the maximum process number of the downlink HARQ supported by the serving cell is configured as one of 2, 4, 6, 10, 12, and 16, it indicates that the downlink HARQ function and the uplink HARQ function are enabled. In other words, a new value is added to the nrofHARQ-ProcessesForPDSCH field in the PDSCH-ServingCellConfig information element in the RRC message, to simultaneously indicate that the downlink HARQ function and the uplink HARQ function are disabled or enabled, to reduce indication overheads required for simultaneously indicating that the downlink HARQ function and the uplink HARQ function are disabled or enabled, thereby improving indication efficiency.

In another possible implementation, the indication information is a HARQ-disable-indicator (HARQ-disable-indicator) field in a serving cell uplink data channel configuration (PUSCH-ServingCellConfig) information element in the RRC message. Herein, the HARQ-disable-indicator field is denoted as a second field, and the HARQ-disable-indicator field may be a newly added optional field in the PUSCH-ServingCellConfig information element. For example, the PUSCH-ServingCellConfig information element includes a plurality of spare bits. The plurality of spare bits may be divided into a plurality of optional fields. For example, the PUSCH-ServingCellConfig information element includes three optional fields. The HARQ-disable-indicator field is one of the three optional fields.

Specifically, the HARQ-disable-indicator field is used for indicating whether the serving cell supports the HARQ function, for example, whether the serving cell supports the uplink HARQ function. For example, when the HARQ-disable-indicator field does not exist, it indicates that the uplink HARQ function is enabled, and a process number of the uplink HARQ is 16. When the HARQ-disable-indicator field exists, it indicates that the uplink HARQ function is disabled.

It may be understood that, as an alternative manner of adding the HARQ-disable-indicator field to the PUSCH-ServingCellConfig information element, a HARQ-enable-indicator (HARQ-enable-indicator) field is added to the PUSCH-ServingCellConfig information element. Specifically, when the HARQ-enable-indicator field does not exist, it indicates that the uplink HARQ function is disabled, and when the HARQ-enable-indicator field exists, it indicates that the uplink HARQ function is enabled.

In this embodiment, the optional HARQ-disable-indicator field is added to the PUSCH-ServingCellConfig information element in the RRC message, and when the HARQ-disable-indicator field does not exist, it indicates that the uplink HARQ function is enabled, and when the HARQ-disable-indicator field exists, it indicates that the uplink HARQ function is disabled, so that the RRC message can indicate, based on existing fields, that the HARQ function is disabled or enabled without adding a field by adding an additional bit in the RRC message, thereby reducing modifications to an existing protocol.

Based on the foregoing embodiment, when the HARQ-disable-indicator field does not exist, it may alternatively simultaneously indicate that the downlink HARQ function and the uplink HARQ function are enabled. When the HARQ-disable-indicator field exists, it simultaneously indicates that the downlink HARQ function and the uplink HARQ function are disabled.

Alternatively, when the HARQ-enable-indicator field does not exist, it simultaneously indicates that the downlink HARQ function and the uplink HARQ function are disabled, and when the HARQ-enable-indicator field exists, it simultaneously indicates that the downlink HARQ function and the uplink HARQ function are enabled. In other words, the optional HARQ-disable-indicator field or the HARQ-enable-indicator field is newly added to the PUSCH-ServingCellConfig information element in the RRC message, to simultaneously indicate that the downlink HARQ function and the uplink HARQ function are disabled or enabled, to reduce indication overheads required for simultaneously indicating that the downlink HARQ function and the uplink HARQ function are disabled or enabled, thereby improving indication efficiency.

In still another possible implementation, the indication information is identification information of a bandwidth part configured by the network device for the terminal, and the indication information of the bandwidth part may be specifically an identity of the bandwidth part (BWP-ID).

It may be understood that, in an uplink direction, the network device may configure at most four BWPs for the terminal. In a downlink direction, the network device may configure at most four BWPs for the terminal. The RRC message in this embodiment may be an RRC message related to a BWP. Specifically, the RRC message may include a downlink BWP (BWP-Downlink) information element and an uplink BWP (BWP-Uplink) information element. The BWP-Downlink information element includes a downlink BWP-ID field, and the BWP-Uplink information element includes an uplink BWP-ID field.

Using the downlink BWP-ID as an example, when a value of the downlink BWP-ID field is within a first range, the downlink HARQ function is disabled, and when the value of the downlink BWP-ID field is within a second range, the downlink HARQ function is enabled. Specifically, the first range is 5 to 9, and the second range is 0 to 4. For example, when the BWP-ID is 0, the HARQ function corresponding to the BWP whose BWP-ID is 0 is enabled. When the BWP-ID is one of 1 to 4, for example, 1, the HARQ function corresponding to the BWP whose BWP-ID is 1 is enabled. The BWP whose BWP-ID is 0 may be used by the terminal for network access. The BWP whose BWP-ID is one of 1 to 4 may be used by the terminal for data transmission. When the BWP-ID is one of 5 to 9, the HARQ function corresponding to the corresponding BWP is disabled.

Similarly, when a value of the uplink BWP-ID field is within the first range, for example, 5 to 9, the uplink HARQ function is disabled, and when the value of the uplink BWP-ID field is within the second range, for example, 0 to 4, the uplink HARQ function is enabled. For example, in the uplink direction, the network device configures four BWPs for the terminal, and IDs of the four BWPs are sequentially 1, 2, 6, and 7. Then, the HARQ function corresponding to the BWP whose BWP-ID is 1 and the HARQ function corresponding to the BWP whose BWP-ID is 2 are enabled. The HARQ function corresponding to the BWP whose BWP-ID is 6 and the HARQ function corresponding to the BWP whose BWP-ID is 7 are disabled.

It may be understood that, a value range of the BWP-ID field in the conventional technology is 0 to 4. In this embodiment, the BWP-ID in the range of 0 to 4 is used to indicate that the HARQ function is enabled, and the BWP-ID out of the value range of 0 to 4, for example, the BWP-ID in the range of 5 to 9, is used to indicate that the HARQ function is disabled. However, 5 to 9 is merely a value range different from 0 to 4 in the conventional technology. In some embodiments, the first range described above may not be limited to 5 to 9, and may alternatively be a value range other than 5 to 9 and different from a value range in the conventional technology, for example, is 10 to 14, or 15 to 19.

In addition, it should be noted that, although the network device may configure four BWPs for the terminal, one BWP is activated each time. The specific one to be activated in the four BWPs needs to be indicated by a bandwidth part indicator (Bandwidth part indicator) field in DCI. The Bandwidth part indicator field includes 2 bits, and the 2 bits may have four values. For example, in the uplink direction, the network device configures four BWPs for the terminal, and IDs of the four BWPs are sequentially 1, 2, 6, and 7. A correspondence between the four values of the 2 bits of the Bandwidth part indicator field and the IDs of the activated BWPs may be shown in the following Table 1:

**Table 1**

| Value of the Bandwidth part indicator field | ID of the activated BWP |
|---|---|
| 2 bits | |
| 00 | 1 |
| 01 | 2 |
| 10 | 6 |
| 11 | 7 |

It may be understood that, the correspondence between the four values of the 2 bits of the Bandwidth part indicator field and the IDs of the activated BWPs that is shown in Table 1 is merely a schematic example, and the correspondence is not limited in this embodiment. In one aspect, when the IDs of the BWPs configured by the network device for the terminal change, the correspondence changes accordingly. For example, when the IDs of the BWPs configured by the network device for the terminal are sequentially 1, 2, 8, and 9, "10" is used for indicating that the ID of the activated BWP is 8, and "11" is used for indicating that the ID of the activated BWP is 9. In a further aspect, a relationship between the values of the Bandwidth part indicator field and the IDs of the activated BWPs may not be the positive correlation shown in Table 1, for example, may be a negative correlation, as shown in the following Table 2, or may be another random relationship, as shown in the following Table 3.

**Table 2**

| Value of the Bandwidth part indicator field | ID of the activated BWP |
|---|---|
| 2 bits | |
| 00 | 7 |
| 01 | 6 |
| 10 | 2 |
| 11 | 1 |

**Table 3**

| Value of the Bandwidth part indicator field | ID of the activated BWP |
|---|---|
| 2 bits | |
| 00 | 2 |
| 01 | 1 |
| 10 | 7 |
| 11 | 6 |

In this embodiment, a value range of the BWP-ID field in the BWP-Downlink information element in the RRC message is expanded to indicate that the downlink HARQ function is disabled or enabled, and a value range of the BWP-ID field in the BWP-Uplink information element in the RRC message is expanded to indicate that the uplink HARQ function is disabled or enabled, so that the RRC message can be used for indicating, without frame format modifications, that the HARQ function is disabled or enabled, thereby reducing modifications to the existing protocol.

In still another possible implementation, the indication information is a spare field in a management information base (Management Information Base, MIB) information element in the RRC message. Herein, the spare field is denoted as a third field. In the conventional technology, the spare field is a spare bit in the MIB information element. In this embodiment, a bit corresponding to the spare field indicates whether the serving cell supports the HARQ function.

Specifically, when the value of the spare field is 0, it indicates that the uplink HARQ function and the downlink HARQ function are both enabled. When the value of the spare field is 1, it indicates that the uplink HARQ function and the downlink HARQ function are both disabled.

Alternatively, when the value of the spare field is 0, it indicates that the uplink HARQ function and the downlink HARQ function are both disabled. When the value of the spare field is 1, it indicates that the uplink HARQ function and the downlink HARQ function are both enabled.

It may be understood that, the spare field may also indicate that one of the uplink HARQ function and the downlink HARQ function is enabled or disabled. For example, when the value of the spare field is 0, it indicates that the uplink HARQ function is enabled, and the downlink HARQ function uses a default configuration. For example, the downlink HARQ function is configured to be disabled in a default mode. When the value of the spare field is 1, it indicates that the uplink HARQ function is disabled, and the downlink HARQ function still uses the default configuration.

Alternatively, when the value of the spare field is 0, it indicates that the downlink HARQ function is enabled, and the uplink HARQ function uses a default configuration. For example, the uplink HARQ function is configured to be disabled in a default mode. When the value of the spare field is 1, it indicates that the downlink HARQ function is disabled, and the uplink HARQ function still uses the default configuration.

In this embodiment, the spare field in the MIB information element is used for indicating whether the serving cell supports the HARQ function. The spare field is a spare bit in the MIB information element. Therefore, when the spare field is used for indicating whether the serving cell supports the HARQ function, the RRC message can be used for indicating, without frame format modifications, that the HARQ function is disabled or enabled, thereby reducing modifications to the existing protocol and improving compatibility with the existing protocol.

It may be understood that some or all of the steps or operations in the foregoing embodiments are merely examples. In this embodiment of this application, other operations or variations of various operations may be further performed. In addition, the steps may be performed in a sequence different from that presented in the foregoing embodiments, and not all operations in the foregoing embodiments may need to be performed.

It may be understood that, in the foregoing embodiments, methods or steps implemented by the terminal device may also be implemented by a component (for example, a chip or a circuit) that can be used in the terminal device, and methods or steps implemented by the network device may also be implemented by a component (for example, a chip or a circuit) that can be used in the network device.

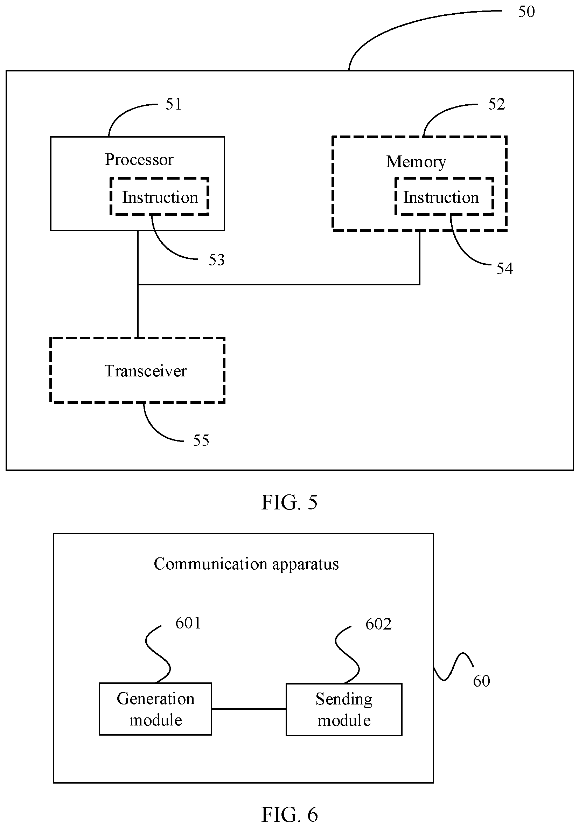

FIG. 5 is a schematic diagram of a structure of a communication apparatus 50. The communication apparatus 50 may be configured to implement a method in a part corresponding to the network device, or a method in a part corresponding to the terminal in the foregoing method embodiments. For details, refer to the descriptions in the foregoing method embodiments.

The communication apparatus 50 may include one or more processors 51. The processor 51 may also be referred to as a processing unit, and may implement a specific control function. The processor 51 may be a general-purpose processor, a dedicated processor, or the like.

In an optional design, the processor 51 may also store instructions 53, and the instructions may be run by the processor, so that the communication apparatus 50 performs the method, described in the foregoing method embodiments, corresponding to the terminal or the network device.

In another possible design, the communication apparatus 50 may include a circuit, and the circuit may implement the sending function, the receiving function, or the communication function in the foregoing method embodiments.

Optionally, the communication apparatus 50 may include one or more memories 52. The memory stores instructions 54 or intermediate data. The instructions 54 may be run on the processor, so that the communication apparatus 50 performs the method described in the foregoing embodiments. Optionally, the memory may further store other related data. Optionally, the processor may also store instructions and/or data. The processor and the memory may be separately disposed, or may be integrated together.

Optionally, the communication apparatus 50 may further include a transceiver 55.

The processor 51 may be referred to as a processing unit. The transceiver 55 may be referred to as a transceiver unit, a transceiver machine, a transceiver circuit, a transceiver, or the like, and is configured to implement a transceiver function of the communication apparatus.

If the communication apparatus is configured to implement an operation corresponding to the network device in the embodiment shown in FIG. 4, for example, the transceiver may send an RRC message to the terminal, where the RRC message includes indication information used for indicating that a HARQ function is enabled or disabled. The transceiver may further complete another corresponding communication function. The processor is configured to complete a corresponding determining or control operation, and optionally, may further store a corresponding instruction in the memory. For a specific processing manner of each component, refer to related descriptions in the foregoing embodiments.

If the communication apparatus is configured to implement an operation corresponding to the terminal in FIG. 4, for example, the transceiver may receive the RRC message sent by the network device. The transceiver may further complete another corresponding communication function. The processor is configured to complete a corresponding determining or control operation, and optionally, may further store a corresponding instruction in the memory. For a specific processing manner of each component, refer to related descriptions in the foregoing embodiments.

The processor and the transceiver described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may also be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Optionally, the communication apparatus may be an independent device or may be a part of a relatively large device. For example, the device may be:
(1) an independent integrated circuit IC, a chip, or a chip system or subsystem;
(2) a set having one or more ICs, where optionally, the IC set may further include a storage component configured to store data and/or instructions;
(3) an ASIC, for example, a modem (MSM);
(4) a module that can be embedded in another device;
(5) a receiver, a terminal, a cellular phone, a wireless device, a handheld phone, a mobile unit, or a network device; or
(6) another device.

FIG. 6 is a schematic diagram of a structure of a communication apparatus 60 according to an embodiment of this application. As shown in FIG. 6, the communication apparatus 60 includes a generation module 601 and a sending module 602. The generation module 601 is configured to generate a radio resource control RRC message. The sending module 602 is configured to send the RRC message to a terminal. The RRC message includes indication information. The indication information is used for indicating that a hybrid automatic repeat request HARQ function is enabled or disabled. The indication information is carried by using at least one of the following resources, and the resources include a data channel resource, a broadcast channel resource, and a resource block.

In FIG. 6, further, the indication information is a first field in a serving cell downlink data channel configuration information element in the RRC message, and the first field is used for indicating a process number of a HARQ supported by a serving cell.

In a possible manner, if the process number that is of the HARQ supported by the serving cell and that is indicated by the first field is 0, a downlink HARQ function is disabled.

In another possible manner, if the process number that is of the HARQ supported by the serving cell and that is indicated by the first field is 0, a downlink HARQ function and an uplink HARQ function are disabled.

Optionally, the indication information is a second field in a serving cell uplink data channel configuration information element in the RRC message, and the second field is used for indicating whether a serving cell supports the HARQ function.

Optionally, if the second field does not exist, the uplink HARQ function is enabled; or if the second field exits, the uplink HARQ function is disabled.

Optionally, if the second field does not exist, the uplink HARQ function and the downlink HARQ function are enabled; or if the second field exists, the uplink HARQ function and the downlink HARQ function are disabled.

Optionally, the indication information is identification information of a bandwidth part configured by the network device for the terminal.

Optionally, the identification information of the bandwidth part includes an identity of the bandwidth part; if a value of the identity of the bandwidth part is within a first range, the HARQ function corresponding to the bandwidth part is disabled; or if the value of the identity of the bandwidth part is within a second range, the HARQ function corresponding to the bandwidth part is enabled.

Optionally, the first range is 5 to 9, and the second range is 0 to 4.

Optionally, the bandwidth part is a downlink bandwidth part or an uplink bandwidth part.

Optionally, the indication information is a third field in a management information base MIB information element in the RRC message, and the third field is used for indicating whether the serving cell supports the HARQ function.

Optionally, if a value of the third field is 0, the uplink HARQ function and the downlink HARQ function are enabled; or if the value of the third field is 1, the uplink HARQ function and the downlink HARQ function are disabled.

Optionally, if the value of the third field is 1, the uplink HARQ function and the downlink HARQ function are enabled; or if the value of the third field is 0, the uplink HARQ function and the downlink HARQ function are disabled.

The communication apparatus in the embodiment shown in FIG. 6 may be configured to perform the technical solution in the foregoing method embodiments. For an implementation principle and a technical effect of the communication apparatus, further refer to related descriptions in the method embodiments. Optionally, the communication apparatus may be the network device, or may be a component (for example, a chip or a circuit) of the network device.

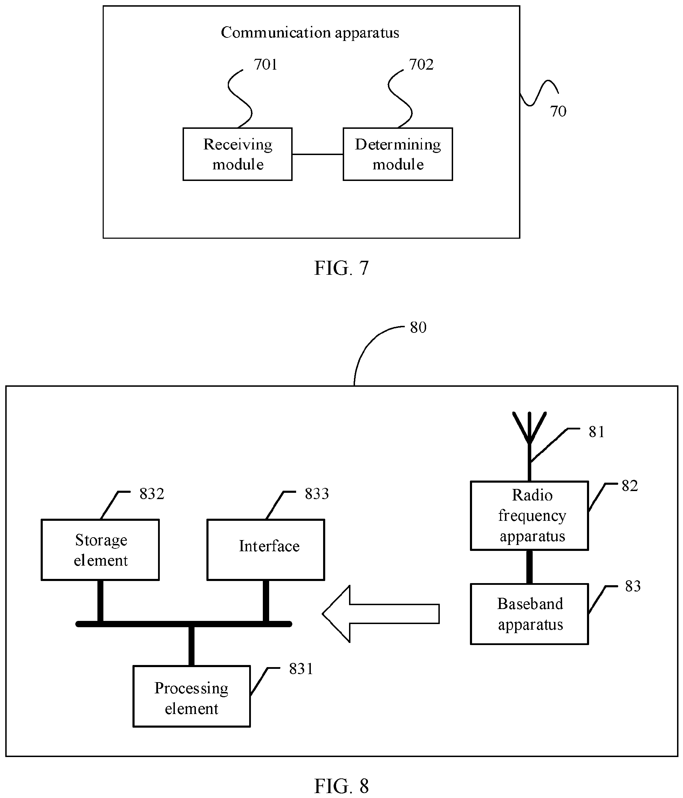

FIG. 7 is a schematic diagram of a structure of another communication apparatus 70 according to an embodiment of this application. As shown in FIG. 7, the communication apparatus 70 includes a receiving module 701 and a determining module 702. The receiving module 701 is configured to receive an RRC message sent by a network device. The RRC message includes indication information. The indication information is used for indicating that a HARQ function is enabled or disabled. The indication information is carried by using at least one of the following resources, and the resources include a data channel resource, a broadcast channel resource, and a resource block. The determining module 702 is configured to determine, based on the indication information, whether the HARQ function is enabled or disabled.

In FIG. 7, further, the indication information is a first field in a serving cell downlink data channel configuration information element in the RRC message, and the first field is used for indicating a process number of a HARQ supported by a serving cell.

In a possible manner, if the process number that is of the HARQ supported by the serving cell and that is indicated by the first field is 0, a downlink HARQ function is disabled.

In another possible manner, if the process number that is of the HARQ supported by the serving cell and that is indicated by the first field is 0, a downlink HARQ function and an uplink HARQ function are disabled.

Optionally, the indication information is a second field in a serving cell uplink data channel configuration information element in the RRC message, and the second field is used for indicating whether a serving cell supports the HARQ function.

Optionally, if the second field does not exist, the uplink HARQ function is enabled; or if the second field exits, the uplink HARQ function is disabled.

Optionally, if the second field does not exist, the uplink HARQ function and the downlink HARQ function are enabled; or if the second field exists, the uplink HARQ function and the downlink HARQ function are disabled.

Optionally, the indication information is identification information of a bandwidth part configured by the network device for the terminal.

Optionally, the identification information of the bandwidth part includes an identity of the bandwidth part; if a value of the identity of the bandwidth part is within a first range, the HARQ function corresponding to the bandwidth part is disabled; or if the value of the identity of the bandwidth part is within a second range, the HARQ function corresponding to the bandwidth part is enabled.

Optionally, the first range is 5 to 9, and the second range is 0 to 4.

Optionally, the bandwidth part is a downlink bandwidth part or an uplink bandwidth part.

Optionally, the indication information is a third field in a management information base MIB information element in the RRC message, and the third field is used for indicating whether the serving cell supports the HARQ function.

Optionally, if the value of the third field is 0, the uplink HARQ function and the downlink HARQ function are enabled; or if the value of the third field is 1, the uplink HARQ function and the downlink HARQ function are disabled.

Optionally, if the value of the third field is 1, the uplink HARQ function and the downlink HARQ function are enabled; or if the value of the third field is 0, the uplink HARQ function and the downlink HARQ function are disabled.

The communication apparatus in the embodiment shown in FIG. 7 may be configured to perform the technical solution in the foregoing method embodiments. For an implementation principle and a technical effect of the communication apparatus, further refer to related descriptions in the method embodiments. Details are not described herein again. The communication apparatus may be a terminal, or may be a component (for example, a chip or a circuit) of the terminal.

It should be understood that division into the foregoing modules of the communication apparatus shown in FIG. 6 and FIG. 7 is merely logical function division. During actual implementation, all or some of the modules may be integrated into one physical entity, or may be physically separated. In addition, all of the modules may be implemented in a form of software invoked by a processing element or in a form of hardware. Alternatively, some of the modules may be implemented in a form of software invoked by a processing element, and some of the modules may be implemented in a form of hardware. For example, the determining module may be an independently disposed processing element, or may be integrated into the communication apparatus, for example, a chip of the network device for implementation. In addition, the determining module may be stored in a memory of the communication apparatus in a form of a program and invoked by a processing element of the communication apparatus to perform a function of each of the foregoing modules. An implementation of another module is similar to the implementation of the determining module. In addition, all or some of these modules may be integrated together, or may be implemented independently. The processor element described herein may be an integrated circuit, and has a signal processing capability. In an implementation process, steps in the foregoing methods or the foregoing modules may be implemented by using a hardware integrated logical circuit in the processing element, or by using instructions in a form of software.

For example, the foregoing modules may be configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA). For another example, when one of the foregoing modules is implemented in a form of scheduling a program by a processing element, the processing element may be a general-purpose processor, for example, a central processing unit (Central Processing Unit, CPU) or another processor that can invoke the program. For another example, the modules may be integrated together, and implemented in a form of a system-on-a-chip (system-on-a-chip, SOC).

FIG. 8 is a schematic diagram of a structure of still another communication apparatus 80 according to an embodiment of this application. The communication apparatus 80 may be specifically a base station. As shown in FIG. 8, the base station includes an antenna 81, a radio frequency apparatus 82, and a baseband apparatus 83. The antenna 81 is connected to the radio frequency apparatus 82. In an uplink direction, the radio frequency apparatus 82 receives, by using the antenna 81, information sent by a terminal, and sends, to the baseband apparatus 83 for processing, the information sent by the terminal. In a downlink direction, the baseband apparatus 83 processes the information about the terminal, and sends the information to the radio frequency apparatus 82. The radio frequency apparatus 82 processes the information about the terminal, and then sends the processed information to the terminal through the antenna 81.

The foregoing communication apparatus may be located at the baseband apparatus 83. In an implementation, the foregoing units are implemented by a processing element scheduling a program. For example, the baseband apparatus 83 includes a processing element and a storage element, and the processing element 831 invokes a program stored in the storage element 832, to perform the method in the foregoing method embodiments. In addition, the baseband apparatus 83 may further include an interface 833, configured to exchange information with the radio frequency apparatus 82. The interface is, for example, a common public radio interface (common public radio interface, CPRI).

In another implementation, the foregoing modules may be configured as one or more processing elements for implementing the foregoing method, and the processing elements are disposed on the baseband apparatus 83. The processing element herein may be an integrated circuit, for example, one or more ASICs, one or more DSPs, or one or more FPGAs. These integrated circuits may be integrated together to form a chip.

For example, the foregoing modules may be integrated together and implemented in a form of a system-on-a-chip (system-on-a-chip, SOC). For example, the baseband apparatus 83 includes an SOC chip, configured to implement the foregoing method. The processing element 831 and the storage element 832 may be integrated into the chip, and the processing element 831 invokes the program stored in the storage element 832, to implement the foregoing method or functions of the foregoing modules. Alternatively, at least one integrated circuit may be integrated in the chip to implement the foregoing method or functions of the foregoing modules. Alternatively, the foregoing implementations may be combined, so that functions of some units are implemented by the processing element invoking a program, and functions of some units are implemented by using an integrated circuit.

Regardless of a manner, the communication apparatus includes at least one processing element, a storage element, and a communication interface, and the at least one processing element is configured to perform the method provided in the foregoing method embodiments. The processing element may perform some or all of the steps in the foregoing method embodiments in a first manner of executing the program stored in the storage element, or in a second manner, to be specific, a manner of using a hardware integrated logic circuit in the processing element in combination with instructions. Certainly, the method provided in the foregoing method embodiments may alternatively be performed by combining the first manner with the second manner.

The processing element herein is the same as that described above, and may be a general-purpose processor such as a central processing unit (Central Processing Unit, CPU), or may be one or more integrated circuits configured to implement the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA). The storage element may be one memory, or may be a general term of a plurality of storage elements.

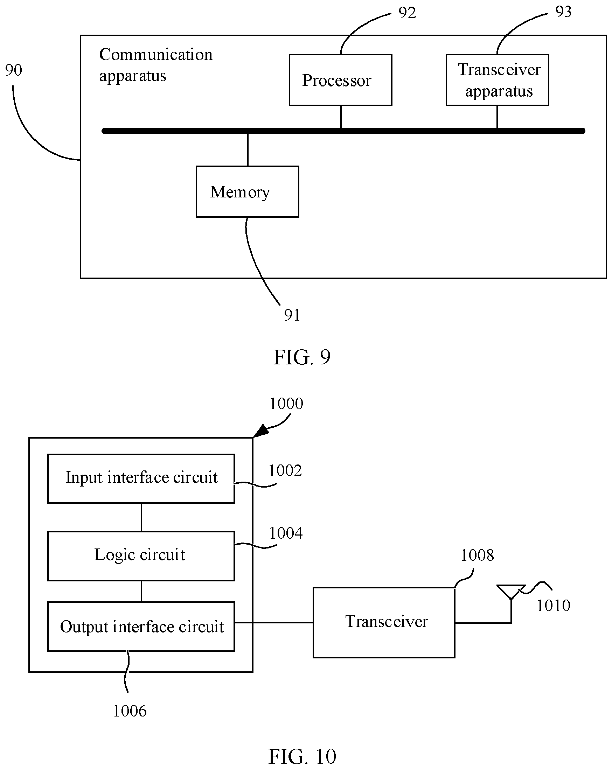

FIG. 9 is a schematic diagram of a structure of still another communication apparatus 90 according to an embodiment of this application. As shown in FIG. 9, the communication apparatus 90 includes a processor 92 and a transceiver apparatus 93. The transceiver apparatus 93 may alternatively be transceiver. The transceiver apparatus 93 receives an RRC message from a network device. The processor 92 determines, based on indication information in the RRC message, whether a HARQ function is enabled or disabled. Further, the apparatus further includes a memory 91, configured to store a computer program or instructions, and the processor 92 is configured to invoke the program or the instructions.

The communication apparatus in the embodiment shown in FIG. 9 may be configured to perform the technical solution in the foregoing method embodiments. For an implementation principle and a technical effect of the communication apparatus, further refer to related descriptions in the method embodiments. Details are not described herein again. The communication apparatus may be a terminal, or may be a component (for example, a chip or a circuit) of the terminal.

In FIG. 9, the transceiver apparatus 93 may be connected to an antenna. In a downlink direction, the transceiver apparatus 93 receives, by using the antenna, information sent by a base station, and sends the information to the processor 92 for processing. In an uplink direction, the processor 92 processes data of the terminal, and sends the data to the base station by using the transceiver apparatus 93.

Optionally, the processor 92 may be configured to implement a corresponding function in the determining module 702 of the communication apparatus shown in FIG. 7, and the transceiver apparatus may be configured to implement a corresponding function in the receiving module 701 of the communication apparatus shown in FIG. 7. Alternatively, some or all of the foregoing modules may be implemented in a form of an integrated circuit that is embedded in a chip of the terminal. In addition, they may be separately implemented, or may be integrated together. The foregoing modules may be configured as one or more integrated circuits for implementing the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA).

In addition, an embodiment of this application further provides a computer-readable storage medium. The computer-readable storage medium stores a computer program. When the computer program is run on a computer, the computer is enabled to perform the method for indicating a hybrid automatic repeat request in the foregoing embodiments.

In addition, an embodiment of this application further provides a computer program product. The computer program product includes computer programs. When run on a computer, the computer programs enable the computer to perform the method for indicating a hybrid automatic repeat request in the foregoing embodiment.

In addition, an embodiment of this application further provides a processor. The processor includes at least one circuit, configured to perform the method for indicating a hybrid automatic repeat request in the foregoing embodiment.

In addition, an embodiment of this application further provides a system. The system includes the terminal and the network device described above.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Based on a same inventive concept as the methods provided in the foregoing embodiments of this application, an embodiment of this application further provides another communication apparatus 1000 shown in FIG. 10. The communication apparatus 1000 is configured to implement the methods in the foregoing embodiments. Some or all of the methods in the foregoing embodiments may be implemented by using hardware, or may be implemented by using software. When the methods are implemented by using hardware, as shown in FIG. 10, the communication apparatus 1000 includes an input interface circuit 1002, a logic circuit 1004, and an output interface circuit 1006. In addition, the communication apparatus 1000 further includes a transceiver 1008 and an antenna 1010. The transceiver 1008 receives and sends data by using the antenna 1010.

The logic circuit 1004 is configured to perform the method for indicating a hybrid automatic repeat request shown in FIG. 4. For details, refer to descriptions in the foregoing method embodiments. Details are not described herein again. In specific implementation, the communication apparatus 1000 may be a chip or an integrated circuit.

## Claims

1. A method for indicating a hybrid automatic repeat request, comprising:
receiving, by a terminal (12), an RRC message sent by a network device (11), wherein the RRC message comprises indication information, and wherein the indication information
is used for indicating that a HARQ function is enabled or disabled,
is carried by using a broadcast channel resource, and is **characterised in that** it
is a spare field in a management information base MIB information element in the RRC message, and the spare field is used for indicating whether a serving cell supports the HARQ function.

2. The method according to claim 1, wherein the indication information is a first field in a serving cell downlink data channel configuration information element in the RRC message, and the first field is used for indicating a process number of a HARQ supported by a serving cell.

3. The method according to claim 2, wherein if the process number that is of the HARQ supported by the serving cell and that is indicated by the first field is 0, a downlink HARQ function is disabled.

4. The method according to claim 2, wherein if the process number that is of the HARQ supported by the serving cell and that is indicated by the first field is 0, a downlink HARQ function and an uplink HARQ function are disabled.

5. The method according to claim 1, wherein the indication information is a second field in a serving cell uplink data channel configuration information element in the RRC message, and the second field is used for indicating whether a serving cell supports the HARQ function.

6. The method according to claim 5, wherein
if the second field does not exist, an uplink HARQ function is enabled; or
if the second field exists, the uplink HARQ function is disabled.

7. The method according to claim 5, wherein
if the second field does not exist, an uplink HARQ function and a downlink HARQ function are enabled; or
if the second field exists, the uplink HARQ function and the downlink HARQ function are disabled.

8. The method according to claim 1, wherein the indication information is identification information of a bandwidth part configured by the network device for the terminal.

9. The method according to claim 8, wherein the identification information of the bandwidth part comprises an identity of the bandwidth part;
if a value of the identity of the bandwidth part is within a first range, the HARQ function corresponding to the bandwidth part is disabled; or
if the value of the identity of the bandwidth part is within a second range, the HARQ function corresponding to the bandwidth part is enabled.

10. The method according to claim 9, wherein the first range is 5 to 9, and the second range is 0 to 4.

11. The method according to any one of claims 8 to 10, wherein the bandwidth part is a downlink bandwidth part or an uplink bandwidth part.

12. The method according to claim 1, wherein if a value of the third field is 0, an uplink HARQ function and a downlink HARQ function are enabled; or
if the value of the third field is 1, the uplink HARQ function and the downlink HARQ function are disabled.

13. The method according to claim 1, wherein
if a value of the third field is 1, an uplink HARQ function and a downlink HARQ function are enabled; or
if the value of the third field is 0, the uplink HARQ function and the downlink HARQ function are disabled.

14. A communication apparatus, comprising a processor (92) and a transceiver (93), wherein the processor and the transceiver communicate with each other by using an internal connection; and the processor is configured to perform processing steps in the method according to any one of claims 1 to 13.

## Patentansprüche

1. Verfahren zum Anzeigen einer hybriden automatischen Wiederholungsaufforderung, umfassend:
Empfangen einer von einer Netzwerkvorrichtung (11) gesendeten RRC-Nachricht durch ein Endgerät (12), wobei die RRC-Nachricht Anzeigeinformationen umfasst und wobei die Anzeigeinformationen verwendet werden, um anzuzeigen, dass eine HARQ-Funktion aktiviert oder deaktiviert ist,
über eine Rundfunkkanalressource übertragen werden, und **dadurch gekennzeichnet sind, dass** sie
ein Ersatzfeld in einem Verwaltungsinformationsbasis-, MIB-, Informationselement in der RRC-Nachricht sind, und das Ersatzfeld verwendet wird, um anzuzeigen, ob eine bedienende Zelle die HARQ-Funktion unterstützt.

2. Verfahren nach Anspruch 1, wobei die Anzeigeinformationen ein erstes Feld in einem Konfigurationsinformationselement für den Downlink-Datenkanal der bedienenden Zelle in der RRC-Nachricht sind und das erste Feld zum Anzeigen einer Prozessnummer einer von einer bedienenden Zelle unterstützten HARQ verwendet wird.

3. Verfahren nach Anspruch 2, wobei eine Downlink-HARQ-Funktion deaktiviert wird, wenn die Prozessnummer der von der bedienenden Zelle unterstützten HARQ, die durch das erste Feld angezeigt wird, 0 ist.

4. Verfahren nach Anspruch 2, wobei eine Downlink-HARQ-Funktion und eine Uplink-HARQ-Funktion deaktiviert werden, wenn die Prozessnummer der von der bedienenden Zelle unterstützten HARQ, die durch das erste Feld angezeigt wird, 0 ist.

5. Verfahren nach Anspruch 1, wobei die Anzeigeinformationen ein zweites Feld in einem Konfigurationsinformationselement für den Uplink-Datenkanal der bedienenden Zelle in der RRC-Nachricht sind und das zweite Feld zum Anzeigen verwendet wird, ob eine bedienende Zelle die HARQ-Funktion unterstützt.

6. Verfahren nach Anspruch 5, wobei
wenn das zweite Feld nicht existiert, eine Uplink-HARQ-Funktion aktiviert wird; oder
wenn das zweite Feld existiert, die Uplink-HARQ-Funktion deaktiviert wird.

7. Verfahren nach Anspruch 5, wobei
wenn das zweite Feld nicht existiert, eine Uplink-HARQ-Funktion und eine Downlink-HARQ-Funktion aktiviert werden; oder
wenn das zweite Feld existiert, die Uplink-HARQ-Funktion und die Downlink-HARQ-Funktion deaktiviert werden.

8. Verfahren nach Anspruch 1, wobei die Anzeigeinformationen Identifikationsinformationen eines durch die Netzwerkvorrichtung für das Endgerät konfigurierten Bandbreitenteils sind.

9. Verfahren nach Anspruch 8, wobei die Identifikationsinformationen des Bandbreitenteils eine Identität des Bandbreitenteils umfassen;
wenn ein Wert der Identität des Bandbreitenteils innerhalb eines ersten Bereichs liegt, die dem Bandbreitenteil entsprechende HARQ-Funktion deaktiviert wird; oder
wenn der Wert der Identität des Bandbreitenteils innerhalb eines zweiten Bereichs liegt, die dem Bandbreitenteil entsprechende HARQ-Funktion aktiviert wird.

10. Verfahren nach Anspruch 9, wobei der erste Bereich 5 bis 9 und der zweite Bereich 0 bis 4 ist.

11. Verfahren nach einem der Ansprüche 8 bis 10, wobei der Bandbreitenteil ein Downlink-Bandbreitenteil oder ein Uplink-Bandbreitenteil ist.

12. Verfahren nach Anspruch 1, wobei, wenn ein Wert des dritten Felds 0 ist, eine Uplink-HARQ-Funktion und eine Downlink-HARQ-Funktion aktiviert werden; oder
wenn der Wert des dritten Felds 1 ist, die Uplink-HARQ-Funktion und die Downlink-HARQ-Funktion deaktiviert werden.

13. Verfahren nach Anspruch 1, wobei
wenn der Wert des dritten Felds 1 ist, eine Uplink-HARQ-Funktion und eine Downlink-HARQ-Funktion aktiviert werden; oder
wenn der Wert des dritten Felds 0 ist, die Uplink-HARQ-Funktion und die Downlink-HARQ-Funktion deaktiviert werden.

14. Kommunikationsvorrichtung, umfassend einen Prozessor (92) und einen Transceiver (93), wobei der Prozessor und der Transceiver unter Verwendung einer internen Verbindung miteinander kommunizieren; und der Prozessor dazu konfiguriert ist, Verarbeitungsschritte in dem Verfahren nach einem der Ansprüche 1 bis 13 auszuführen.

## Revendications

1. Procédé d'indication d'une demande de répétition automatique hybride, comprenant :
la réception, par un terminal (12), d'un message RRC envoyé par un dispositif réseau (11), dans lequel le message RRC comprend des informations d'indication, et dans lequel les informations d'indication
sont utilisées pour indiquer qu'une fonction HARQ est activée ou désactivée,
sont acheminées en utilisant une ressource de canal de diffusion, et sont **caractérisées en ce qu'**elles
constituent un champ de réserve dans un élément d'information de base d'informations de gestion MIB dans le message RRC, et le champ de réserve est utilisé pour indiquer si une cellule de desserte prend en charge la fonction HARQ.

2. Procédé selon la revendication 1, dans lequel les informations d'indication constituent un premier champ dans un élément d'information de configuration de canal de données de liaison descendante de cellule de desserte dans le message RRC, et le premier champ est utilisé pour indiquer un numéro de processus d'un processus HARQ pris en charge par une cellule de desserte.

3. Procédé selon la revendication 2, dans lequel si le numéro de processus qui provient du processus HARQ pris en charge par la cellule de desserte et qui est indiqué par le premier champ est 0, une fonction HARQ de liaison descendante est désactivée.

4. Procédé selon la revendication 2, dans lequel si le numéro de processus qui provient du processus HARQ pris en charge par la cellule de desserte et qui est indiqué par le premier champ est 0, une fonction HARQ de liaison descendante et une fonction HARQ de liaison montante sont désactivées.

5. Procédé selon la revendication 1, dans lequel les informations d'indication constituent un deuxième champ dans un élément d'information de configuration de canal de données de liaison montante de cellule de desserte dans le message RRC, et le deuxième champ est utilisé pour indiquer si une cellule de desserte prend en charge la fonction HARQ.

6. Procédé selon la revendication 5, dans lequel
si le deuxième champ n'existe pas, une fonction HARQ de liaison montante est activée ; ou
si le deuxième champ existe, la fonction HARQ de liaison montante est désactivée.

7. Procédé selon la revendication 5, dans lequel
si le deuxième champ n'existe pas, une fonction HARQ de liaison montante et une fonction HARQ de liaison descendante sont activées ; ou
si le deuxième champ existe, la fonction HARQ de liaison montante et la fonction HARQ de liaison descendante sont désactivées.

8. Procédé selon la revendication 1, dans lequel les informations d'indication sont des informations d'identification d'une partie de bande passante configurée par le dispositif réseau pour le terminal.

9. Procédé selon la revendication 8, dans lequel les informations d'identification de la partie de bande passante comprennent une identité de la partie de bande passante ;
si une valeur de l'identité de la partie de bande passante se situe dans une première plage, la fonction HARQ correspondant à la partie de bande passante est désactivée ; ou
si la valeur de l'identité de la partie de bande passante se situe dans une seconde plage, la fonction HARQ correspondant à la partie de bande passante est désactivée.

10. Procédé selon la revendication 9, dans lequel la première plage est comprise entre 5 et 9 et la seconde plage est comprise entre 0 et 4.

11. Procédé selon l'une quelconque des revendications 8 à 10, dans lequel la partie de bande passante est une partie de bande passante de liaison descendante ou une partie de bande passante de liaison montante.

12. Procédé selon la revendication 1, dans lequel si une valeur du troisième champ est 0, une fonction HARQ de liaison montante et une fonction HARQ de liaison descendante sont activées ; ou si la valeur du troisième champ est 1, la fonction HARQ de liaison montante et la fonction HARQ de liaison descendante sont désactivées.

13. Procédé selon la revendication 1, dans lequel
si une valeur du troisième champ est 1, une fonction HARQ de liaison montante et une fonction HARQ de liaison descendante sont activées ; ou
si la valeur du troisième champ est 0, la fonction HARQ de liaison montante et la fonction HARQ de liaison descendante sont désactivées.

14. Appareil de communication, comprenant un processeur (92) et un émetteur-récepteur (93), dans lequel le processeur et l'émetteur-récepteur communiquent l'un avec l'autre en utilisant une connexion interne ; et le processeur est configuré pour effectuer des étapes de traitement dans le procédé selon l'une quelconque des revendications 1 à 13.
